# EUROPEAN PATENT SPECIFICATION

(11) **EP 0 876 763 B1**
(45) Date of publication and mention of the grant of the patent: **01.10.2003**
(21) Application number: 98200618.1
(22) Date of filing: 27.02.1998
(51) Int. Cl.: A21D 8/02, A21D 10/00, A21D 8/04

(54) **Process for the preparation of extrudates for bakery application**
Verfahren zur Herstellung von Extrudaten für die Bäckanwendung
Procédé pour la fabrication de produits extrudés utilisés en boulangerie

(30) Priority: 28.02.1997 DE 19708165; 24.07.1997 EP 97202318
(43) Date of publication of application: 11.11.1998
(73) Proprietor: UNILEVER N.V., 3000 DK Rotterdam (NL); UNILEVER PLC, London EC4P 4BQ (GB); Cognis Deutschland GmbH & Co. KG, 40589 Düsseldorf (DE)
(72) Inventor: Adams, Wolfgang, 88074 Meckenbueren (DE); Funke, Andreas, 89165 Dietenheim (DE); Geywitz, Peter, 89079 Ulm (DE); Golitz, Hartman, 87787 Wolfertsschwenden (DE); Horlacher, Peter, 88477 Schwendi (DE); Kniel, Barbel, 89231 Neu-Ulm (DE); Rochau, Bernd, 89231 Neu-Ulm (DE); Sander, Andreas, 89257 Illertissen (DE)
(74) Representative: van Westenbrugge, Andries

(56) References cited:
- EP-A- 0 619 947
- EP-A- 0 650 669
- EP-A- 0 676 142
- DE-A- 4 106 483
- US-A- 3 950 543

## Description

Although in the prior art the preparation of extrudates for bakery applications is indicated (WO 95/09909) this prior art refers for the actual processing to the methodology of US 4 661 452 or GB 1 362 365. In these last two references however extrudates for bakery application are not indicated. The technology as disclosed therein is only revealed with respect to extrudates for detergent technology. The consequence thereof being that the extrudates resulting from that processing either are not suitable for bakery application or contain binder materials that strengthen them but that are not food-grade and thus cannot be used in products for bakery application. E.g. GB 1 362 365 discloses in its examples compositions that contain enzymes and a salt like Na2SO4 or enzymes and casein or skim milk powder. A premix is made thereof and this premix is wetted by spraying of water on it. The water content of the resulting mix is 3-25 wt%. The resulting wetted premix is then subjected to extrusion. Performing the process with these components in this way will lead to products with insufficient strength. In a number of other examples binder materials are added. The examples disclose that these binder materials are selected from materials like polyethyleneglycol, pluronics, polyvinylpyrrolidone, etc that are in fact ingredients that are not food grade. Therefore this prior art does not solve the problem of how to make an extrudate suitable for bakery application that is strong enough and that is food grade and that performs well as a bakery ingredient.

According to US 4 661 452 extrudates for detergents can be made by an extrusion process on compositions that contain enzymes,< 2 % chloride, a granulating aid, water and a filler. The filler comprises a water soluble salt preferably in combination with a water insoluble salt. The product obtained however is still plastic and thus lacks sufficient strength for our purposes.

From DE/EP 0 235 601 a process is known for the preparation of flavour regulating compositions for rye-products, wherein a malt material with a water content of less than 12% is extruded at 180-240° whereupon the extrudates are diminutived. This process cannot be applied on materials that contain enzymes or gelatinisable starch materials.

In WO 95/01727 it is disclosed that non dusting enzymes can be made by a process wherein a binder material is applied. This binder can be an emulsifier. However this document does not disclose that the process for the preparation can be an extrusion process. Extrusion is only indicated as a way to liberate the enzymes from the granulates obtained by the process by using shear forces.

From DE 2.219.675 a process is known wherein a fat mix is melted, the molten fat is cooled till a plastic fat phase is obtained, which plastic fat is subjected to extrusion. The extrudate is diminutived and the fat particles are contacted with a powder. The result therefore is fat particles that carry on their surface powder particles.

EP 650 669 discloses baking improver compositions in an homogeneous solid, shaped form, comprising baking improver agents and at least one binding agent. Extrusion is indicated as possible route to make the compositions. However, nothing is said about the use of specific emulsifiers during the extrusion.

EP-A 0 619 947 is concerned with the manufacture of homogeneous compositions that largely consist of yeast and which contain an effective amount of a processing aid to maintain homogeneity for at least 2 weeks. In experiment 1 it is described how block yeast was compressed to reduce the moisture content to 66%, after which 1.0 wt.% of a rehydration agent (Span-60; sorbitan monostearate) was added in the form of an aqueous emulsion. The combination is extruded 3 times through a screen to distribute the rehydration agent properly over the yeast. Subsequently, the particles so obtained are combined with enzymes (2.02 % on dry weight) and ascorbic acid (1.34% on dry weight) and pressed through a screen to rod-shaped particles which are dried in a fluid bed-dryer. The extrudates thus obtained from the extruder do not possess sufficient strength.

We studied whether we could find a method for the preparation of extrudates for bakery application that contain a dusting material, such as an enzyme and that do not display dusting properties any more, that are strong enough to be applicable in bakery, that are free flowing, dissolve readily in dough compositions and perform well as bakery ingredient.

As a results of this study we found that by using specific emulsifiers and possibly fats with a narrow range of melting temperature above problems could be overcome. Moreover we found as a bonus that the use of these emulsifiers had another advantage. I.e. extrudates coming from the extruder should be cut directly after they leave the extruder. As in the extruder the temperature will be above ambient and the extrusion only performs well if the emulsifier is in liquid form it is essential that a solid emulsifier melts in the extruder. However on the other hand we found that in order to be able to cut and handle the extrudates formed in the extruder it is a must that the emulsifier is crystallising rapidly coming from the extruder.
In this way we found that the emulsifier can take over the binder properties of the non food grade binders known from the prior art, resulting in products that are strong and
fulfil simultaneously all the other criteria for a bread improver ingredient. The temperatures that are developed, during the extrusion can be kept low enough in this way to avoid that the enzymes loose their activity.

Therefore our invention concerns in the first instance a process for the preparation of a non dusting bakery composition comprising at least a food grade component with dusting properties, an emulsifier with a melting point between 40 and 60 °C, and possibly a fat, preferably with a melting point between 40 and 70 °C and a filler material, preferably on basis of a carbohydrate, wherein an extrudate is made by feeding an extruder with the components either as separate ingredients or as a premix of one or more of the components the total water content of the ingredients fed to the extruder being less than 20%, and extruding and mixing of the combined components in the extruder at a temperature below 120°C, preferably below 90°C most preferably below 80°C and diminuting the extrudate leaving the extruder to a size wherein it is free flowing.

Very good results are obtained with carbohydrate filler materials selected from the group consisting of: flours, modified flours, sugars, starches, modified starches, guar gum, locust bean gum, alginates, xanthan gum and CMC.

The emulsifiers can be selected from the group consisting of diacetyl tartaric esters of fatty acids, stearyl lactylates salts of Ca, K or Na, polysorbates, mono/diglyceride mixes and ethoxylated monoglycerides. We however prefer the use of DATA esters, because then the best extrudates with the most optimal bread improver properties regarding the baking performance can be obtained.
In particular DATA esters derived from fatty acids with 6-24 C atoms perform well, from these the derivatives from acids with 12-18 C atoms are the most preferred. As additional emulsifier lecithin can be added, although the use of lecithin in the absence of DATA esters does not work.
In the extrudates also a fat can be present. Fats that can be applied are either normal fats for bakery application or fats that have preferably a melting temperature between 40 and 70°C. The amount of fat is suitably 2-30 wt%, preferably 4-15 wt%.

The food grade component with dusting properties is suitably an enzyme composition. Enzymes that can be applied are beneficially selected from the group consisting of amylases, xylanases, hemicellulases, lipases, oxidases, peroxidases, proteases, galactomannanases and pectinases.

In addition to the components mentioned above more components can be incorporated into the extrudates. Therefore our process also involves the use of one or more of the components selected from the group consisting of reducing agents, oxidants, sugars, preservatives, malt materials, souring agents, salts, soy materials, milk components, and solubility promoting agents. These components are added to either the premix that is fed to the extruder or to one of the components that is fed separately to the extruder.

Typical examples of reducing agents and oxidants are ascorbic acid, bromate salts, azodicarbonimide, cystin, cystein, glutathion and glutathion containing compounds. These agents are important to improve the bread improving properties of the extrudates.

Sugars that can be applied as filler material are glucose, fructose, maltose, sucrose, the syrups containing these sugars, but also lactose, sugar-alcohols and maltodextrin can be applied.

Preservatives that can be applied are the well known food grade preservatives such as the sorbate or propionate salts from in particular K and Na. However other food grade preservatives can be applied as well.

The malt materials that can be used are malt flour or malt extracts.

The souring agents are used to regulate the pH of the extrudates. In this way the pH can be adjusted to the pH of the product wherein the extrudates will be applied. Any food grade souring agent can be used. Examples being organic acids such as acetic acid, citric acid, tartaric acid, lactic acid, malic acid but also inorganic acids can be used such as phosphoric acids, sulfuric acid or carbonic acid.

The soy materials can be selected from the well known soy ingredients like soy flour, soy oil, soy proteins.

The solubility promoting agent is present to increase the speed with which the extrudates are dispersed in the dough system. Although the extrudates without this agent can disperse readily it can also be that this speed is not yet sufficiently high and that a solubility promoting agent is applied in order to increase this speed. In general these solubility promoting agents are a combination of an acidic agent and an alkaline agent. Examples hereof being: sodiumhydrogen carbonate or sodium carbonate as alkaline ingredient and citric acid or an acidic phosphate as acidic agent. Other useful combination are well known in the art. This solubility promoting agent is applied advantageously in amounts of 0.5-15 wt % on total mix before extrusion. The preferred amount being 2-10 wt%.

The milk components that can be added are in general skimmed milk powder, full milk powder, non fat milk powder, casein etc.

Further salts such as acetates, citrates, lactates, maleates, sulfates or phosphates and inert components such as MgO, microcrystalline cellulose ,Ca-stearate, polyglycols or silica acid can be added as well.

In the process according to the invention the amount of water present in the mix that will be subjected to the extrusion conditions can be restricted to very low values. However the process is very difficult to perform if no water is present in the mix. The water level therefore is so much that the total water content of the ingredients fed to the extruder is less than 20%, preferably less than 10%, more preferably less than 7%, in particular 1-7 wt% based on the total weight of the ingredients. It was found that the best results were obtained if the water is added as part of the ingredients, e.g. as crystal water or hydrated water.

Above process is very suitable in case that all bread improver ingredients that are applied are not liquid. In case one or more of the ingredients is liquid we prefer to apply a slightly adapted process. In this process the ingredients are added in different stages to the extruder. So this process comprises the steps of:
(i) one or more solid bread improver-components selected from the group of: solid fats with a melting point between 40 and 80°C, food grade enzymes, reducing agents, oxidants, salts, sugars, preservatives, malt materials, soy materials, milk components, solid souring agents, solubility promoting agents and filler materials, preferably being a carbohydrate are premixed, resulting in a premix that at least contains a filler material based on a carbohydrate and a bread improver component that in pure form displays dusting properties
(ii) optionally a minor amount, but not more than 20 % of the total amount of a bread improving emulsifier with a melting point between 40 and 60°C and/or a minor amount, but not more than 20% of the water required in the total bread improver mix is (are) mixed with the premix resulting from (i)
(iii) the premix resulting from (i) or (ii) is transferred to an extruder and separately the rest of the total amount of bread improving emulsifier with the melting point between 40 and 60°C and/or melted fat and/or liquid souring agents and/or the rest of the water required for the total composition is transferred to this extruder for mixing and extrusion.

By performing the process in this way we guarantee that the emulsifier with its melting point between 40 and 60°C is in liquid form in the extruder so that it can act as a binder, while this emulsifier crystallises rapidly after leaving the extruder so that during the further production process after the extruder the emulsifier is solid again.

The water content of the total mix product that is subjected to extrusion is at most 20 wt%, preferably at most 10 wt% and most preferably at most 7 wt%.

The food grade component with dusting properties is suitably an enzyme composition. Enzymes that can be applied are beneficially selected from the group consisting of amylases, xylanases, hemicellulases, cellulases, lipases, oxidases, peroxidases, proteases, galactomannanases and pectinases.
The enzyme content of the total mix before extrusion is preferably 0.01-80 wt%.
However also ingredients like malt material, salts, sugars, flours, carbohydrates, thickening agents can act as the dusting ingredient.

The content of food grade emulsifier in the total mix before extrusion is preferably 0.1-50 wt%, more preferably 2-30 wt%.

The carbohydrate filler material is used in a quantity of 5-95 wt% on total mix before the extrusion.

Also cross linking agents such as polyethylene glycolmonostearate or saccharose monopalmitate or monostearate or cetylalcohol or fat alcoholsulfates can be added as well.

So far bread improver compositions made by prior art processes display a considerable abrasion when subjected to a milling treatment. In particular compositions with a considerable particle size such as a size of about 1 mm are not very abrasive resistant.

In order to determine and define the abrasive resistance of our novel extrudates we have developed a test method to measure this parameter. According to this method the extrudates are first sieved in order to remove any material with a particle size of less than 150 micron. Then 50 ml of extrudates are measured in a glass and weighted. This amount of extrudates is transferred to a ball mill comprising a stainless steel cylinder of 10 x 10 cm containing 50 porcelain balls with a diameter of 10 mm. The mill is rotated under a angle of 16 o to horizontal with a stirred motor at 90 rpm for 5 minutes. This mill is emptied completely and the content is subjected to a sieving on a sieve of 150 micron under vibration for 1 min. The fines are collected and weighted. The percentage of the fines on the total amount of particles is calculated.
(=A%) The average particle size (=S) of the extrudates is measured (defined as the average length of the cylinders).

The resistance against abrasion can now be defined by the' ratio A:S realising that a low value means that the particle are very resistant against abrasion.

This ratio A/S is rather high for products known in the prior art and is very low for our new products as can be obtained by our new process using the ingredients indicated. Therefore we found a novel free flowing homogeneous product that can combine low water contents with relatively large particle size and relatively high resistance against abrasion. Still the properties such as the ability to solve quickly in a dough remain excellent for these novel products.

Our novel products thus can be defined as extrudates suitable for use as bread improver composition, comprising at least a food grade ingredient with dusting properties, an emulsifier with a melting point between 10 and 60 °C, preferably between 25 and 60 °C most preferably between 40 and 60 °C and a filler material, preferably based on a carbohydrate, which extrudates are characterised by a cylindrical shape preferably with a particle size of 0.5-2 mm by a diameter of 0.7-1.3 mm. The extrudates contain, after being subjected to the milling treatment under the conditions set out in the specification, an amount of particles with a particle size of less than 150 µm of less than 3 wt%, preferably less than 1 wt%, more preferably less than 0.5 wt% of the total amount of particles being subjected to the milling treatment.

Our novel extrudates can also contain other components often present in bread improver compositions. Examples of these components are:
- fats with a melting point between 40 and 70 °C
- reducing agents
- oxidants
- salts
- sugars
- preservatives
- malt materials
- souring agents
- soy materials
- salts like NaCl
- milk components
- and solubility promoting agents.

The dusting food grade ingredients is preferably an enzyme selected from the group consisting of: amylases, xylanases, hemicellulases, cellulases, lipases, oxidases, proteases, galactomannases and pectinases.

The filler material is preferably selected from the group consisting of: flours, modified flours, starches, guar gum, locust bean gum, alginates, xanthan gum and CMC.

The emulsifier is selected on basis of its melting point. Very suitable emulsifiers can be selected from the group consisting of diacetyl tartaric esters of fatty acids, stearyl lactylate salts of Ca, K or Na, polysorbates, mono/diglyceride mixes and ethoxylated monoglycerides.

The water content of our extrudates is in general less than 5 wt%, while the enzyme content can range from 0.01-80 wt%, the emulsifier content can range from 0.1-50 wt% and the filler material content can range from 5-95 wt%.

In a last embodiment of the invention we also consider the products obtainable by performing the process disclosed above to be part of our invention. These products have improved properties over all the non dusting bread improver compositions we know, and are thus novel over these compositions. In particular our extrudates do not generate dust, are very stable against shear forces, have a very consistent particle size distribution and are stable at high temperatures and pressure.

### EXAMPLES

### EXAMPLE 1

In an extruder provided with concurrent twin extruder blades leaving an extrusion diameter of about 37 mm and with an effective length of 22 x the diameter the following mix was extruded:

| component | wt % |
|---|---|
| fat: melting point: 58 °C | 4.0 |
| DATA ester: melting point 45 °C | 10.0 |
| enzyme preparation | 0.6 |
| ascorbic acid | 0.2 |
| dextrose | 30.0 |
| malt flour | 25.0 |
| guar gum | 10.0 |
| flour | up to 100. |

The product temperature was maintained at below 80°C by tempering the models of the extruder at 40-50°. The rotation speed of the blades was 50 rpm and the throughput was 20 kg/hr.
A sieve plate was provided with openings of 1 mm diameter. The extrudate coming from the extruder was diminutived by transferring it through a cutter directly after the extruder outlet.

The product was an extrudate with a cylindrical form of 0.5 to 2.0 mm, that was dust free, free flowing, readily dispersible in a dough and displayed excellent bread improver properties.

### EXAMPLE 2

| Solid premix: | wt% |
|---|---|
| malt extract | 20 |
| guar gum | 10 |
| enzyme preparation | 0.6 |
| dextrose | 30 |
| ascorbic acid | 0.2 |
| flour | up to 100 |

The solid ingredients were mixed and transferred to the extruder. A liquid emulsifier and a liquid fat were added with a temperature of 80°C.

The emulsifier was a DATA-ester with melting temperature 45 °C and was used in 8% (on total product), the fat was used in 5% (on total product). The m.pt of DATA-ester/fat mix was 53-55 °C.

The extrusion was performed as in example 1. The results obtained were comparable with the results of example 1.

### Comparative example:

A mix was made of:

| Ingredient | wt% |
|---|---|
| Lecithin | 20 |
| enzyme preparation | 0.6 |
| ascorbic acid | 0.2 |
| dextrose | 20 |
| sucrose | 10 |
| malt-extract | 20 |
| sodium pyrophosphate | 3 |
| flour | up to 100 |

This mixture was transferred to an extruder. This mixture could not be extruded. A paste like product was formed.

## Claims

1. Process for the preparation of a non dusting bakery composition comprising at least a food grade component with dusting properties preferably an enzyme, an emulsifier with a melting point between 40 and 60°C, possibly a fat, preferably with a melting point between 40 and 70°C and a filler material, preferably on basis of a carbohydrate, wherein an extrudate is made by feeding an extruder with the components either as separate ingredients or as a premix of one or more of the components, the total water content of the ingredients fed to the extruder being less than 20%, and extruding and mixing of the combined components in the extruder at a temperature below 120°C, preferably below 90°C, most preferably below 80°C and diminuting the extrudate leaving the extruder to a size wherein it is free flowing.

2. Process according to claim 1, wherein also one or more of the components selected from the group consisting of reducing agents, oxidants, sugars, preservatives, malt materials, souring agents, soy materials, salts, milk components, and solubility promoting agents are added to either the premix that is fed to the extruder or to one of the components that is fed separately to the extruder.

3. Process according to claims 1 or 2 wherein the total water content of the ingredients fed to the extruder is less than 10%, more preferably less than 7%, in particular 1-7 wt% based on the total weight of the ingredients.

4. Process according to claims 1-3, wherein
(i) one or more solid bread improver-components selected from the group of: solid fats with a melting point between 40 and 70°C, food grade enzymes, reducing agents, oxidants, salts, sugars, preservatives, malt materials, soy materials, milk components, solid souring agents, salts, solubility promoting agents and filler materials, preferably being a carbohydrate, are premixed, resulting in a premix that at least contains a filler material based on a carbohydrate and a bread improver component that in pure form displays dusting properties
(ii) optionally a minor amount, but not more than 20% of the total amount of a bread improving emulsifier with a melting point between 40 and 60°C and/or a minor amount, but not more than 20 % of the water required in the total bread improver mix is (are) mixed with the premix resulting from (i)
(iii) the premix resulting from (i) or (ii) is transferred to the extruder and separately the rest of the total amount of bread improving emulsifier with the melting point between 40 and 60°C and/or melted fat and/or liquid souring agents and/or the rest of the water required for the total composition is transferred to this extruder for mixing and extrusion.

5. Process according to claims 1-4, wherein the food grade enzyme is selected from the group consisting of: amylases, xylanases, hemicellulases, cellulases, lipases, oxidases, peroxidases, proteases, galactomannanases and pectinases.

6. Process according to claims 1-5, wherein the reducing agents and oxidants are selected from the group consisting of: ascorbic acid, bromate salts, cystin, cystein, azodicarbonimid, glutathion and glutathion-containing compounds.

7. Process according to claims 1-6, wherein the sugars are selected from the group consisting of: saccharose, glucose, fructose, sugar alcohols, syrups containing these sugars, lactose, maltose and maltodextrin.

8. Process according to claims 1-7 wherein the solubility promoting agent is a gas generating system comprising one or more of the following components: carbonates, hydrogencarbonates, acidic phosphates, food grade acids, in particular citric acid.

9. Process according to claims 1-8, wherein the carbohydrate fillers are selected from the group consisting of: flours, modified flours, starches, modified starches, sugars, guar gum, locust bean gum, alginates, xanthan gum and CMC.

10. Process according to claims 1-9, wherein the food grade emulsifier with the melting point between 40 and 60°C is selected from diacetyl tartaric esters of fatty acids, stearyl lactylates salts of Ca, K or Na, polysorbates, mono/diglyceride mixes and ethoxylated monoglycerides.

11. Process according to claims 1-10, wherein the watercontent of the total mix before the extrusion is maintained at most 20 wt%, preferably at most 10 wt%, more preferably at most 7 wt%.

12. Process according to claims 1-11, wherein the enzyme content of the total mix before extrusion is 0.01-80 wt%.

13. Process according to claims 1-12, wherein the content of food grade emulsifier in the total mix before extrusion is 0.1-50 wt%, most preferably 2-30 wt%.

14. Process according to claims 1-13, wherein the content of carbohydrate filler material in the total mix before extrusion is 5-95 wt%.

15. Process according to claims 1-14, wherein the content of solubility promoting agent in the total mix before extrusion is 0.5-15 wt%.

16. Process according to claims 1-15, wherein the fat content of the total mix before extrusion is 2-30 wt%.

17. Bread-improver extrudates as obtainable by the process according to claims 1-16.

18. Extrudates suitable for use as bread improver composition, comprising at least a food grade ingredient with dusting properties, an emulsifier with a melting point between 10 and 60 °C, preferably between 25 and 60 °C and a filler material, preferably based on a carbohydrate, which extrudates are **characterised by** a cylindrical shape preferably with a particle size of 0.5-2 mm by a diameter of 0.7-1.3 mm, while the extrudates contain, after being subjected to a milling treatment under the conditions set out in the specification, an amount of particles with a particle size of less than 150 micron, that are formed by the milling treatment of less than 3 wt%.

19. Extrudates according to claim 18, wherein the extrudates also contain a fat with a melting point between a 40 and 70 °C.

20. Extrudates according to claims 18 and 19, wherein the dusting food grade ingredient is an enzyme selected from the group consisting of: amylases, xylanases, hemicellulases, cellulases, lipases, oxidases, proteases, galactomannases and pectinases.

21. Extrudates according to claims 18-20, wherein the extrudates also comprise on or more of the components selected from the group consisting of: reducing agents, oxidants, sugars, preservatives, malt materials, souring agents, soy materials, salts, milk components, and solubility promoting agents.

22. Extrudates according to claims 18-21, wherein the water content of the extrudates is less than 5 wt%.

23. Extrudates according to claims 18-22, wherein the filler material is selected form the group consisting of: flours, modified flours, starches, modified starches, sugars, guar gum, locust bean gum, alginates, xanthan gum and CMC.

24. Extrudates according to claims 18-23 wherein the emulsifier is selected from the group consisting of diacetyl tartaric esters of fatty acids, stearil lactylate salts of Ca, K or Na, polysorbates, mono/diglyceride mixes and ethoxylated monoglycerides.

25. Extrudates according to claims 18-24 wherein the enzyme content of the extrudates is 0.01-80 wt%.

26. Extrudates according to claims 18-25 wherein the emulsifier content is 0.1-50 wt%.

27. Extrudates according to claims 18-26 wherein the filler material content is 5-95 wt%.

## Patentansprüche

1. Verfahren zur Herstellung einer nichtstaubenden Backmischung, die mindestens einen lebensmittelunbedenklichen Bestandteil mit staubenden Eigenschaften, vorzugsweise ein Enzym aufweist, einen Emulgator mit Schmelzpunkt zwischen 40 und 60°C, wenn möglich ein Fett, vorzugsweise mit einem Schmelzpunkt zwischen 40 und 70°C, und ein Füllmittel, vorzugsweise auf der Basis eines Kohlenhydrates, **dadurch gekennzeichnet, dass** ein Extrudat hergestellt wird, indem ein Extruder mit den Bestandteilen entweder als getrennte Inhaltsstoffe oder als eine Vormischung von einem oder mehreren der Bestandteile befüllt wird, während der Gesamtwassergehalt der Inhaltsstoffe, die in den Extruder gegeben werden, weniger als 20 % beträgt, und der Extrudier- und Mischprozess der zusammengeführten Bestandteile in dem Extruder bei einer Temperatur unter 120 °C, vorzugsweise unter 90 °C, besonders bevorzugt unter 80 °C abläuft, und worin das Extrudat gelöst wird, bis es den Extruder in einem frei fließenden Zustand verlässt.

2. Verfahren nach Anspruch 1, **dadurch gekennzeichnet, dass** auch ein oder mehrere der Bestandteile, die ausgewählt sind aus der Gruppe, die gebildet wird von: Reduktionsmitteln, Oxidationsmitteln, Kohlenhydraten, Konservierungsstoffen, Malzstoffen, Säuerungsmitteln, Sojaerzeugnissen, Salzen, Milchbestandteilen und Lösungsvermittlern, entweder der Vormischung zugesetzt werden, die in den Extruder gegeben wird, oder einer der Bestandteile, die getrennt in den Extruder gegeben werden.

3. Verfahren nach den Ansprüchen 1 und 2, **dadurch gekennzeichnet, dass** der Gesamtwassergehalt der Inhaltsstoffe, die in den Extruder gegeben werden, geringer als 10 % ist, vorzugsweise geringer als 7 %, besonders bevorzugt 1-7 Gew.-%, bezogen auf das Gesamtgewicht der Inhaltsstoffe.

4. Verfahren nach den Ansprüchen 1 bis 3, **dadurch gekennzeichnet, dass** (i) ein oder mehrere feste Brotverbesserungsstoffe eingesetzt werden, ausgewählt aus der Gruppe, die gebildet wird von: festen Fetten mit einem Schmelzpunkt zwischen 40 und 70 °C, lebensmittelunbedenklichen Enzymen, Reduktionsmitteln, Oxidationsmitteln, Salzen, Kohlenhydraten, Konservierungsstoffen, Malzstoffen, Sojaerzeugnissen, Milchbestandteilen, festen Säuerungsmitteln, Salzen, Lösungsvermittlern und Füllmitteln, die vorzugsweise ein Kohlenhydrat sind und vorgemischt werden, woraus eine Vormischung entsteht, die mindestens ein Füllmittel auf der Grundlage eines Kohlenhydrats und einen Brotverbesserungsstoff enthält, der in Reinform staubende Eigenschaften aufweist.
(ii) gegebenenfalls eine geringe Menge, jedoch nicht mehr als 20 % der Gesamtmenge eines brotverbessernden Emulgators mit einem Schmelzpunkt zwischen 40 und 60°C und/oder einer geringen Menge, jedoch nicht mehr als 20 % des Wassers, das in der Gesamtbrotverbesserungsmischung benötigt wird, wird/werden in die Vormischung eingerührt, die aus (i) entsteht.
(iii) die Vormischung, die aus (i) oder (ii) entsteht, wird in den Extruder gegeben, und separat der Rest der Gesamtmenge des brotverbessernden Emulgators mit dem Schmelzpunkt zwischen 40 und 60 °C und/oder geschmolzenes Fett und/oder flüssiges Säuerungsmittel und/oder der Rest des Wassers, das für die Gesamtmischung benötigt wird, wird separat in diesen Extruder zum Zweck des Mischens und Extrudierens gegeben.

5. Verfahren nach den Ansprüchen 1 bis 4, **dadurch gekennzeichnet, dass** das lebensmittelunbedenkliche Enzym ausgewählt wird aus der Gruppe, die gebildet wird von: Amylasen, Xylanasen, Hemicellulasen, Cellulasen, Lipasen, Oxidasen, Peroxidasen, Proteasen, Galactomannanasen und Pectinasen.

6. Verfahren nach den Ansprüchen 1 bis 5, **dadurch gekennzeichnet, dass** die Reduktionsmittel und Oxidationsmittel ausgewählt werden aus der Gruppe, die gebildet wird von: Ascorbinsäure, Bromatsalzen, Cystin, Cystein, Azodicarbonimid, Glutathion und Glutathion enthaltende Bestandteile.

7. Verfahren nach den Ansprüchen 1 bis 6, **dadurch gekennzeichnet, dass** die Kohlenhydrate ausgewählt werden aus der Gruppe, die gebildet wird von: Saccharose, Glucose, Fruktose, Zuckeralkoholen, Sirups, die diese Kohlenhydrate enthalten, Laktose, Maltose und Maltodextrin.

8. Verfahren nach den Ansprüchen 1 bis 7, **dadurch gekennzeichnet, dass** der Lösungsvermittler ein gaserzeugendes System ist, das einen oder mehrere der folgenden Bestandteile umfasst: Carbonate, Hydrogencarbonate, saure Phosphate, lebensmittelunbedenkliche Säuren, insbesondere Zitronensäure.

9. Verfahren nach den Ansprüchen 1 bis 8, **dadurch gekennzeichnet, dass** die Kohlenhydratfüllmittel ausgewählt werden aus der Gruppe, die gebildet wird von: Mehlen, modifizierten Mehlen, Stärken, modifizierten Stärken, Kohlenhydrate, Guarkernmehl, Johannesbrotkernmehl, Alginaten, Xanthangummi und Carboxymethylcellulose.

10. Verfahren nach den Ansprüchen 1 bis 9, **dadurch gekennzeichnet, dass** der lebensmittelunbedenkliche Emulgator mit dem Schmelzpunkt zwischen 40 und 60°C ausgewählt wird aus Diacetylweinsäureestern von Fettsäuren, Stearylmilchsäuresalzen von Ca, K oder Na, Polysorbaten, Mono-/Diglyceridmischungen und ethoxylierten Monoglyceriden.

11. Verfahren nach den Ansprüchen 1 bis10, **dadurch gekennzeichnet, dass** der Wassergehalt der Gesamtmischung vor dem Extrudieren bei höchstens 20 Gew.-% gehalten wird, vorzugsweise bei höchstens 10 Gew.-%, und besonders bevorzugt bei höchstens 7 Gew.-%.

12. Verfahren nach den Ansprüchen 1 bis 11, **dadurch gekennzeichnet, dass** der Enzymgehalt der Gesamtmischung vor der Extrusion 0.01-80 Gew.-% beträgt.

13. Verfahren nach den Ansprüchen 1 bis 12, **dadurch gekennzeichnet, dass** der Gehalt von lebensmittelunbedenklichem Emulgator in der Gesamtmischung; vor dem Extrudieren 0,1-50 Gew.-%, und besonders bevorzugt 2-30 Gew.-% beträgt.

14. Verfahren nach den Ansprüchen 1 bis 13, **dadurch gekennzeichnet, dass** der Gehalt an Kohlenhydratfüllmittel in der Gesamtmischung vor dem Extrudieren 5-95 Gew.-% beträgt.

15. Verfahren nach den Ansprüchen 1 bis 14, **dadurch gekennzeichnet, dass** der Gehalt an löslichkeitsförderndem Mittel in der Gesamtmischung vor dem Extrudieren 0,5-15 Gew.-% liegt.

16. Verfahren nach den Ansprüchen 1 bis 15. **dadurch gekennzeichnet, dass** der Fettgehalt der Gesamtmischung vor dem Extrudieren 2-30 Gew.-% beträgt.

17. Brotverbessernde Extrudate, wie sie in dem Verfahren nach den Ansprüchen 1 bis 16 gewonnen werden.

18. Extrudate, die zur Verwendung als brotverbessernde Zusammensetzung genutzt werden, bestehend aus mindestens einem lebensmittelunbedenklichen inhaltsstoff mit staubenden Eigenschaften, einem Emulgator mit einem Schmelzpunkt zwischen 10 und 60 °C, vorzugsweise zwischen 25 und 60 °C und einem Füllmittel, vorzugsweise auf Grundlage eines Kohlenhydrates, dessen Extrudate charakterisiert sind durch eine zylindrische Form, vorzugsweise mit einer Teilchengröße von 0,5-2 mm mit einem Durchmesser von 0,7-1,3 mm, während die Extrudate nach dem Vermahlen unter den in der Beschreibung beschriebenen Bedingungen einen Gehalt an Teilchen mit einer Teilchengröße von weniger als 150 µm enthalten, welche während der Vermahlung von weniger als 3 Gew.-% gebildet werden.

19. Extrudate nach Anspruch 18, **dadurch gekennzeichnet, dass** die Extrudate auch ein Fett mit einem Schmelzpunkt zwischen 40 und 70 °C enthalten.

20. Extrudate nach den Ansprüchen 18 und 19, **dadurch gekennzeichnet, dass** der staubende lebensmittelunbedenkliche Inhaltsstoff ein Enzym ist, ausgewählt aus der Gruppe, die gebildet wird von: Amylasen, Xylanasen, Hemicellulasen, Cellulasen, Lipasen, Oxidasen, Proteasen, Galactomannanasen und Pektinasen.

21. Extrudate nach den Ansprüchen 18 bis 20, **dadurch gekennzeichnet, dass** die Extrudate auch einen oder mehrere der Komponenten umfassen, die ausgewählt werden aus der Gruppe, die gebildet wird von: Reduktionsmitteln, Oxidationsmitteln, Kohlenhydraten, Konservierungsstoffen, Malzstoffen, Säuerungsmitteln, Sojaerzeugnissen, Salzen, Milchbestandteilen und Lösungsvermittlern.

22. Extrudate nach den Ansprüchen 18 bis 21, **dadurch gekennzeichnet, dass** der Wassergehalt der Extrudate weniger als 5 Gew.-% beträgt.

23. Extrudate nach den Ansprüchen 18 bis 22, **dadurch gekennzeichnet, dass** das Füllmittel ausgewählt wird aus der Gruppe, die gebildet wird von: Mehlen, modifizierten Mehlen, Stärken, modifizierten Stärken, Kohlenhydraten, Guarkemmehl, Johannesbrotkemmehl, Alginaten, Xanthangummi und Carboxymethylcellulose.

24. Extrudate nach den Ansprüchen 18-23, **dadurch gekennzeichnet, dass** der Emulgator ausgewählt wird aus der Gruppe, die gebildet wird von Diacetylweinsäureestern von Fettsäuren, Stearylmilchsäuresalze von Ca, K oder Na, Polysorbaten, Mono-/Diglyceridmischungen und ethodylierten Monoglyceriden.

25. Extrudate nach den Ansprüchen 18 bis 24, **dadurch gekennzeichnet, dass** der Enzymgehalt der Extrudate 0,01-80 Gew.-% beträgt.

26. Extrudate nach den Ansprüchen 18 bis 25, **dadurch gekennzeichnet, dass** der Emulgatorgehalt 0,1-50 Gew.-% beträgt.

27. Extrudate nach den Ansprüchen 18 bis 26, **dadurch gekennzeichnet, dass** das Füllmittel 5-95 Gew.-% beträgt.

## Revendications

1. Procédé de production d'une composition de boulangerie, exempte de poussière contenant au moins un ingrédient approprié pour un produit alimentaire ayant des propriétés qui mettent de la poussière, de préférence un enzyme, un agent émulsionnant ayant un point de fusion compris entre 40 et 60°C, éventuellement une graisse, de préférence ayant un point de fusion compris entre 40 et 70°C et une substance de charge, de préférence à base d'un hydrate de carbone, dans lequel un produit d'extrusion est produit de telle sorte qu'on charge une extrudeuse avec les composants soit individuellement, soit en prémélange d'un ou plusieurs composants, la teneur totale en eau des composants amenés à l'extrudeuse étant moins de 20 %, on mélange et on extrude les unes avec les autres les substances utilisées combinées dans l'extrudeuse à une température en dessous de 120°C, de préférence en dessous de 90°C et en particulier en dessous de 80°C, et les produits d'extrusion qui sortent de l'extrudeuse sont broyés dans une mesure telle que le produit est librement fluide.

2. Procédé selon la revendication 1,
dans lequel
on ajoute un ou plusieurs des composants choisis dans le groupe formé des agents réducteurs, des agents d'oxydation, des sucres, des agents conservateurs, des malts, des agents d'acidification, des produits de soja, des sels, des composants lactés et des produits qui améliorent la solubilité, soit aux prémélanges, soit aux substances individuelles qui sont amenées à l'extrudeuse.

3. Procédé selon la revendication 1 ou la revendication 2,
dans lequel
la teneur totale en eau, des substances qui sont amenées à l'extrudeuse, s'élève à moins de 10 % - de préférence moins de 7 % et en particulier de 1 à 7 % en poids, rapportée à la quantité totale des substances utilisées.

4. Procédé selon l'une quelconque des revendications 1 à 3, dans lequel :
(i) on mélange une ou plusieurs substances d'addition en vue de l'amélioration de la qualité du pain , choisies dans le groupe formé des graisses solides ayant des points de fusion compris entre 4 et 70°C, des enzymes appropriées pour les produits alimentaires des agents réducteurs, des agents d'oxydation des sois, des sucres, des agents conservateurs, des malts, des produits du soja, des sels, des composants lactés, des produits qui améliorent la solubilité et des substances de charge, de préférence des hydrates de carbone, grâce à quoi on obtient un prémélange qui renferme au moins une substance de charge à base d'hydrate de carbone et un additif en vue de l'amélioration de la qualité du pain, qui. dispose sous sa forme habituelle de propriétés d'émission de poussière,
(ii) on mélange éventuellement une faible quantité, cependant pas plus de 20 % rapportés à la teneur totale, en agents émulsionnants qui améliorent la qualité du pain, ayant des points de fusion compris entre 40 et 60°C et/ou une faible quantité mais pas plus de 20 % de l'eau qui est nécessaire dans le mélange j total d'amélioration du pain, avec le prémélange provenant de (i),
(iii) on transfère le mélange provenant des étapes (i) ou (il) dans une extrudeuse et séparément on amène la quantité restante en agents émulsionnants qui améliorent la qualité du pain, ayant un point de fusion dans la zone comprise entre 40 à 60°C et/ou la graisse fondue et/ou les agents d'acidification liquides et/ou la quantité résiduelle d'eau requise pour la quantité totale, en vue du mélange et de l'extrusion.

5. Procédé selon l'une quelconque des revendications 1 à 4, dans
dans lequel
les enzymes appropriése pour les produits alimentaires sont choisies dans le groupe formé des amylases, des xylanases, des hémicellulaires, des cellulases, des lipases, des oxydases, des peroxydases, des protéases, des galactomannanases, et des pectinases.

6. Procédé selon l'une quelconque des revendications 1 à 5,
dans lequel
les agents réducteurs et les agents oxydants sont choisis dans le groupe formé de l'acide ascorbique, des sels de bromate, de la cystine, de la cystéine, de l'azodicarbonimide, du glutathion et des substances contenant du glutathion.

7. Procédé selon l'une quelconque des revendications 1 à 6,
dans lequel,
les sucres sont choisis dans le groupe formé du saccharose, du glucose, du fructose, des alcools de sucre, des sirops qui renferment ces sucres, du lactose, du maltose et de la maltodextrine.

8. Procédé selon l'une quelque des revendications 1 à 7,
dans lequel
les agents d'amélioration de la solubilité sont formés par des systèmes qui produisent des gaz, qui renferment plusieurs composants choisis dans le groupe formé des carbonates, des hydrogénocarbonates, des phosphates acides, et des acides appropriés pour des produits alimentaires, en particulier de l'acide citrique.

9. Procédé selon l'une quelconque des revendications 1 à 8,
dans lequel
les substances de charge contenant des hydrates de carbone, sent choisies dans le groupe formé des farines, des farines modifiées, des amidons, des amidons modifiés, des sucres, de la gomme gnar, de la gomme de graines de carbone, des alignates, de la gomme xanthane et de la CMC.

10. Procédé selon l'une quelconque des revendications 1 à 9,
dans lequel
les agents émulsionnants appropriés pour les produits alimentaires ayant des points de fusion compris entre 40 et 60°C, sont choisis dans le groupe formé des esters d'acide d'acyltartrique, des acides gras, des sels de Ca, K ou de Na des stéarylactylates, des polysorbates, des mélanges de mono/ diglycérides et des monoglycérides éthoxylés.

11. Procédé selon l'une quelconque des revendications 1 à 10,
dans lequel
la teneur en eau du mélange total avant l'extrusion est maintenue au maximum à 20 % en poids, de préférence au maximum de 10 % en poids et en particulier au maximum de 7 % en poids.

12. Procédé selon l'une quelconque des revendications 1 à 11,
dans lequel
la teneur en enzymes, rapportée au mélange total s'élève avant l'extrusion à 0,01 à 80 % en poids.

13. Procédé selon l'une quelconque des revendications 1 à 12,
dans lequel
la teneur en agents émulsionnants appropriés pour des produits alimentaires s'élève, rapportée au mélange total avant l'extrusion à 0,1 à 50 % en poids et de préférence à 2 à 30 % en poids.

14. Procédé selon l'une quelconque des revendications 1 à 13,
dans lequel
la teneur en substances de charge contenant des hydrates de carbone, s'élève, rapportée au mélange total, avant l'extrusion à 5 à 95 % en poids.

15. Procédé selon l'une quelconque des revendications 1 à 14,
dans lequel
la teneur en produits qui améliorent la solubilité, rapporté au mélange total avant l'extrusion, s'élève à 0,5 à 15 % en poids.

16. Procédé selon l'une quelconque des revendications 1 à 15,
dans lequel
la teneur en matières grasses rapportée au mélange total avant l'extrusion s'élève à 2 à 30 % en poids.

17. Produits d'extrusion en vue de l'amélioration de la qualité du pain, accessibles selon le procédé selon l'une quelconque des revendications 1 à 16.

18. Produits d'extrusion en vue de l'amélioration de la qualité du pain, contenant au moins un ingrédient approprié pour les produits alimentaires ayant des propriétés qui émettent de la poussière, un agent émulsionnant ayant un point de fusion compris entre 10 et 60°C, de préférence entre 25 et 60°C et une substance de charge, de préférence à base d'un hydrate de carbone, qui se **caractérisent** par une forme cylindrique, de préférence ayant une taille de particules allant de 0,5 à 2 mm pour un diamètre de 0,7 à 1,3 mm, avec la précision que les produits d'extrusion après qu'ils aient été soumis au processus de broyage dans les conditions citées dans la description, contiennent une proportion de particules ayant une taille de particules de moins de 150 µm, qui se forment pendant le broyage, en une quantité de moins de 3 % en poids.

19. Produits d'extrusion selon la revendication 18,
dans lesquels
les produits d'extrusion renferment en outre une matière grasse ayant un point de, fusion compris entre 40 à 70°C.

20. Produits d'extrusion selon les revendications 18 à 19,
dans lesquels
les ingrédients appropriés pour des produits alimentaires qui émettent de la poussière, représentent des enzymes qui sont choisies dans le groupe forme d'amylases, de xylanases, d'hémicellulases, des cellulases, de lipases, d'oxydases, de protéates, de galactomannanases et de pectinases.

21. Produits d'extrusion selon l'une quelconque des revendications 18 à 20,
dans lesquels
les produits d'extrusion renferment en outre un ou plusieurs composants qui sont choisis dans le groupe formé par les agents réducteurs, les agents d'oxydation, les sucres, les agents conservateurs, les malts, des produits d'acidification, les produits du soja, les sels, les composants lactés et les produits qui améliorent la solubilité.

22. Produits d'extrusion selon l'une quelconque des revendications 18 à 21,
dans lesquels
la teneur en eau des produits d'extrusion s'élève à moins de 5 % en poids.

23. Produits d'extrusion selon l'une quelconque des revendications 18 à 22,
dans lesquels
les produits de charge sont choisis dans le groupe formé des farines, des farines modifiées, des amidons, des amidons modifiés, des sucres, de la gomme guar, de gomme xanthane et de CMC.

24. Produits d'extrusion selon l'une quelconque des revendications 18 à 23,
dans lesquels
les agents émulsionnants sont choisis dans le groupe formé d'esters d'acide d'acidetyltartrique d'acide gras, de sels de Ca, de K ou de Na des stéarylactylates, des polysorbates, des mélanges de mono/diglycérides et de monoglycerides éthoxylés.

25. Produits d'extrusion selon l'une quelconque des revendications 8 à 24,
dans lesquels
la teneur en enzymes s'élève à 0,01 à 80 % en poids.

26. Produits d'extrusion selon l'une quelconque des revendications 15 à 25,
dans lesquels
la teneur en agents émulsionnants s'élève à 0,1 à 50 % en poids .

27. Produits d'extrusion selon l'une quelconque des revendications 18 à 26
dans lesquels
la teneur en produits de charges s'élève à 5 à 95 % en poids.
